# EUROPEAN PATENT SPECIFICATION

(11) **EP 1 235 215 B1**
(45) Date of publication and mention of the grant of the patent: **14.05.2003**
(21) Application number: 02076720.8
(22) Date of filing: 01.04.1997
(51) Int. Cl.: G11B 7/26, B29D 17/00, B29C 65/52, B32B 31/12

(54) **Method and apparatus for glueing together disc elements**
Verfahren und Gerät zum Zusammenkleben von Scheibenelementen
Procédé et appareil permettant de coller ensemble des éléments de disque

(30) Priority: 01.04.1996 SE 9601263
(43) Date of publication of application: 28.08.2002
(62) Divisional of application: 97916703.8
(73) Proprietor: OTB Group B.V., 5657 EB Eindhoven (NL)
(72) Inventor: Ohman, Ove, 755 91 Uppsala (SE)
(74) Representative: Prins, Adrianus Willem

(56) References cited:
- PATENT ABSTRACTS OF JAPAN vol. 011, no. 015 (P-536), 16 January 1987 (1987-01-16) & JP 61 190738 A (RICOH CO LTD), 25 August 1986 (1986-08-25)
- PATENT ABSTRACTS OF JAPAN vol. 014, no. 001 (P-985), 8 January 1990 (1990-01-08) & JP 01 253846 A (MATSUSHITA ELECTRIC IND CO LTD), 11 October 1989 (1989-10-11)
- PATENT ABSTRACTS OF JAPAN vol. 1997, no. 06, 30 June 1997 (1997-06-30) & JP 09 035335 A (PIONEER ELECTRON CORP;PIONEER VIDEO CORP), 7 February 1997 (1997-02-07)

## Description

The present invention relates to a method of glueing together two disc elements. especially substrates for digital audio, video or computer discs, such as digital video discs (DVDs).

When manufacturing certain types of data storage discs, such as so-called DVDs, with one or more information layers, two substrate discs of polycarbonate of a thickness of 0.6 mm are normally glued together, with the information layer(s) adjacent to the adhesive layer joining the discs.

In one proposed method of glueing, the adhesive is applied to one of the discs by means of a printing process, for example screen printing, whereafter the discs are joined together. This method does not waste adhesive and the application can be done very rapidly. However, there is some risk of air enclosures when the discs are put together and some risk that the printing system will break down should the screen printing blanket rupture.

A method using double adhesive tape for joining the two disc elements has also been suggested, but this method causes air enclosures and provides a joint of unreliable strength and thermal stability. Nor can this method be used for DVDs of the type "SD9", i.e. where both of the discs elements have information layers and where these layers are to be read by laser light which must pass, with the correct defraction, through the joint layer between the disc elements.

JP-A-61 194662 and JP-A-05 020714 disclose apparatus for the manufacture of a carrier by arranging a substrate on a stamper, wherein curable adhesive is applied in a gap between the substrate and the stamper and spread out by rotating the same in one and the same direction.

EP-A-0 243 517 discloses a method for bringing together two disc shaped substrates by means of a thin layer of curable adhesive which is spread between the substrates by centrifugal forces caused by rotation thereof in one and the same direction.

WO-A-87 02934 discloses a method of making an optical disc by applying to a flat disc substrate a thin uniform layer of a curable composition. A circular bead of the composition is injected into a gap between the substrate and an opposing master mold (stamper) while rotating a nozzle relative to the substrate and the stamper, or vice versa. Then, the gap is closed to flatten out and spread the composition radially inwardly and outwardly between the substrate and the stamper.

One purpose of the present invention is to suggest a glueing method which prevents the occurrence of air enclosures in the adhesive layer between the discs.

For this purpose, the method according to the invention comprises the steps defined in claim 1.

It has been found that a simultaneous or essentially simultaneous wetting of the opposing gap surfaces with an easily flowing adhesive with good capillary filling properties is an essential precondition in order for the applied adhesive to flow out and be evenly distributed over the entire surface between the outer and inner peripheral limiting edges of the disc elements without forming air enclosures, since the disc elements are brought towards each other with only the aid of gravity and "are sucked together" by the capillary forces of the adhesive. In this way a very uniform, homogeneous adhesive layer without air enclosures can be obtained without forceably pressing the discs together.

The disc elements are held relative to each other in such a way during the application of adhesive that a radially outwardly diverging gap is formed between at least one radially outer section of the disc elements.

The diverging gap is obtained by curving one or both of the disc elements convexly from each other, preferably by creating a subatmospheric pressure on the side of the disc element facing away from the gap.

The adhesive is applied preferably by injection via a nozzle insertable into the gap during simultaneous rotation of the disc elements, whereupon a coherent annular adhesive string can be laid out in the gap between the disc elements.

After application of the adhesive string, the nozzle is retracted and the two disc elements are rotated individually in opposite directions, each at least half a rotation, preferably about one half to one rotation, so that any uneveness in the circumferential distribution of the adhesive string can be evened out by the disc elements producing a shearing effect in the adhesive. The result will be a homogeneous and uniform ring of adhesive, which is an essential precondition for even distribution over the entire disc surface of the adhesive in a subsequent step.

The present invention also relates to a device for glueing together disc elements of the above mentioned type, as defined in claim 9.

In order to create a diverging gap to facilitate insertion of the adhesive application means between the disc elements, there is one holder that can have an essentially convex surface facing the disc element. This convex surface is intended to define, together with the disc element and sealing elements a space which can be subjected to vacuum.

The means for applying adhesive can comprise a nozzle which is disposed to direct, either radially from outside or inside, a stream of adhesive into the gap in such a way that the stream of adhesive strikes facing surfaces of the disc elements essentially simultaneously. The nozzle can be insertable into and extractable from the gap so that its opening comes close to the facing gap surfaces in an inner portion of the gap.

In order to provide a continuous annular string of adhesive in the gap, the holders are rotatable.

For the case when only one of the holders is arranged to curve an associated disc element to create the adhesive introduction gap, it is suitable to make the lower holder with a planar disc-carrying surface.

The invention will be described in more detail below with reference to the accompanying drawings, in which:
Figure 1 shows a schematic cross-section of an enlarged section of a so-called DVD of "SD9" type to illustrate its construction;
Figure 2 shows a schematic cross-sectional view of a device according to the invention for glueing together DVDs substrates, where both disc substrates are curved to form an adhesive introduction gap;
Figure 3 shows the device in Figure 2 in a step after injection of adhesive, when the disc elements are flattened out and the homogeneous layer of adhesive has been formed therebetween;
Figure 4 shows an alternative embodiment of the device according to the invention, where only one holder curves its associated disc element to form an adhesive introduction gap;
Figure 5 shows the device in Figure 4 when the disc elements have been joined together by gravity and the capillary forces of the adhesive;
Figure 6 shows a device not according to the invention, where the disc elements are kept in separated plane-parallel relation during adhesive application, whereby the adhesive is introduced by means of an adhesive introduction nozzle insertable radially from within into the gap between the disc elements; and
Figure 7 shows the device in Figure 6 in a step after the introduction of adhesive, when the upper disc element has been released from its holder after having been joined to the lower disc element to form a homogeneous adhesive layer between the disc elements.

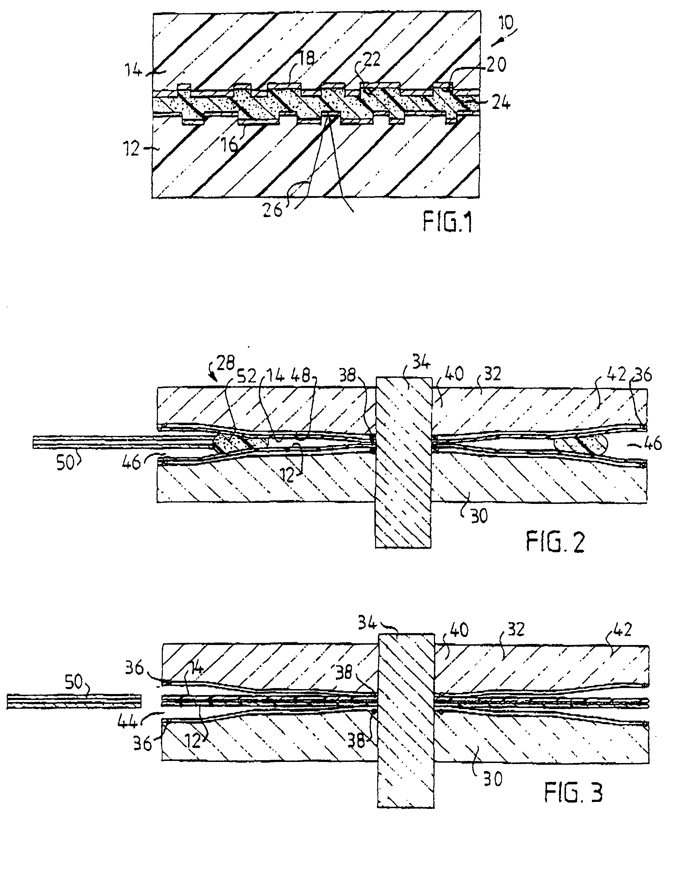

Figure 1 shows schematically a digital data storing disc of CD format, namely a so-called digital video disc 10 of the type called "SD9". Such a disc 10 comprises two disc substrates 12, 14, each having a thickness of 0.6 mm and a diameter of ca 120 mm and made of a transparent plastic material such as polycarbonate. Each disc substrate 12, 14 respectively has an information layer 16, 18 respectively on facing sides containing short 20 and long 22 depressions with a depth of about 0.1 µm. The information layer 16 on the lower disc substrate 12 is coated with a layer of for example Al, Au or SiN which is semi-reflecting for laser light, while the information layer 18 on the upper disc substrate 14 is made completely reflecting. The two disc substrates 12, 14 are joined together by means of a thin adhesive layer 24 (cirka 14-70 µm), the index of refraction of which should be complementary to the index of reflection of the substrates (polycarbonate) in order to avoid any refractive error when the laser light is to read the upper information layer 18. In Figure 1, a light beam 26 is shown which is focused on the lower, semi-reflecting layer 16.

For DVDs 10 with double information layers, as shown in Figure 1, it is of the greatest importance that the adhesive layer 24 be homogeneous and completely free of air enclosures in order to provide undisturbed focusing of the laser light on the information layer 18. This problem is, however, not critical in a single layer DVD ("SD5"), where the upper disc substrate can be a blank information free disc, i.e. where only a single lower completely reflecting layer is read.

Figure 2 shows schematically a device 28 according to the invention for glueing together two disc substrates 12, 14. The device 28 comprises a lower substrate holder 30 and an upper substrate holder 32, which are rotatable about a central shaft 34. The holders 30, 32, which can be essentially identical, each have an outer and inner sealing ring 36 and 38 respectively and are formed with a thicker hub portion 40 and a thinner peripheral portion 42 in order to create between the holders 30, 32 a radially outwardly diverging space 44 (Figure 3) in order to make it possible to hold the disc substrates 12, 14 in a convexly curved state for the application of adhesive, as shown in Figure 2.

For the purpose of holding securely the respective disc elements 12, 14 in a convexly curved state to form an intermediate radially outwardly diverging gap 46 for the introduction of adhesive, each of the holders 30, 32 have a surface section between its outer and inner sealing rings 36, 38, forming therebetween and with a disc element a space 48 which is in communication with a vacuum source (not shown). After placing a disc substrate 12, 14 on each holder 30, 32 and connecting a vacuum source (not shown), the substrates can be made to curve to the shape shown in Figure 2 or similar thereto, thus making it possible to insert an adhesive dispensing nozzle 50 into the outer broadest portion of the gap 46 in order to dispense a carefully measured amount of a flowable adhesive towards a narrow portion of the gap so that the adhesive essentially comes into contact simultaneously with the facing surfaces of the substrates. By rotating the two holders 30, 32 one rotation at the same time as adhesive is injected, an annular string of adhesive 52 is created around the substrate gap. After application of the adhesive string 52, the nozzle 50 is retracted from the gap 46. In order to eliminate any uneveness in the distribution of adhesive in the peripheral adhesive string, the two holders are also rotatable relative to each other, so that the adhesive string can be subjected to a shearing effect and thus be made more even before the disc substrates are brought together. The relative rotation is performed suitably by causing the two holders to rotate approximately one half to one complete rotation in opposite directions. The vacuum in the space 48 is then equalized so that the disc substrates 12, 14 are released from their respective holders and spring back to a normal flat state, as shown in Figure 3, whereupon the adhesive in the string 52, due to the bringing together of the disc substrates and the capillary forces of the adhesive, will be distributed uniformly in the space between the disc substrates 12, 14. Any air present between the disc substrates will thus be expelled from the intermediate space, both radially inwards and radially outwards so that a thin even adhesive layer is formed which is free from air enclosures.

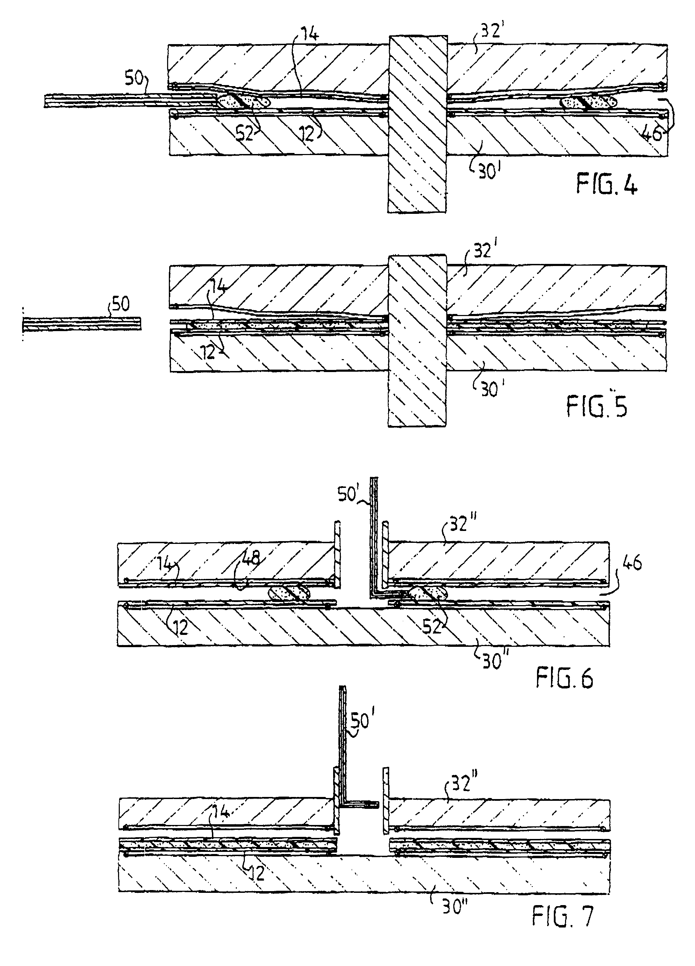

Figure 4 shows an alternative simplified embodiment of a disc glueing device according to the present invention, which differs from the device described above only in that the lower holder 30' is made flat and lacks means for bending the associated disc substrate. Instead, only the upper holder 32' is arranged to achieve an adhesive introduction gap 46 and for this purpose it must bend its associated disc substrate 14 somewhat more than in the embodiment according to Figures 2 and 3 to permit insertion of the adhesive application nozzle 50.

Figure 5 shows the disc elements 12, 14 in their flat state after adhesive applciation in the embodiment shown in Figure 4, after the adhesive has spread out and filled the gap between the disc elements 12, 14 to the required extent.

A device not according to the invention is shown in Figures 6 and 7, where the disc elements 12, 14 at glue application are kept essentially in a plane-parallel spaced state by a planar lower holder 30", and a planar upper holder 32". The adhesive is inserted into the gap 46 between the disc elements of means of an adhesive injection nozzle 50', which can be inserted into the gap radially from within. After application of a circular string 52 of adhesive by rotation of the holders 30", 32" one rotation during adhesive dispensing, the nozzle 50' is then retracted, and after a relative rotation of the holders for even spreading of the adhesive string the upper disc element 14 is released from its holder 32", as shown in Figure 7, and the disc elements 12, 14 are brought together by the effect of gravity on the upper disc element and the effect of capillary forces in the adhesive, striving to pull the two disc elements 12, 14 towards each other as the adhesive spreads out and fills the space between the disc elements forming a uniform adhesive layer free from air enclosures.

Within the scope of the invention it is also conceivable to apply the adhesive by injecting it into the gap via one or more fixed nozzles, which do not need to be inserted into the gap. It would thus be sufficient to have such a fixed nozzle which ejects a well-defined stream of adhesive towards a preferably tapered portion of the gap 46, making contact at the same time with the two facing surfaces of the substrates.

It is also conceivable within the scope of the invention to make the substrate holders in such a manner that, after adhesive application, they also exert a pressure on the disc substrates 12, 14 to accelerate the filling out of the gap with adhesive.

## Claims

1. Method of glueing together two disc elements (12, 14), especially substrates for digital audio, video or computer discs, such as DVD's, comprising the steps of:
a) bringing the two disc elements (12, 14 ) together coaxially with each other in such a manner that a gap (46) is left between the disc elements:
b) applying in an inner area of the gap (46) a liquid adhesive (52) into the shape of a ring in such manner that the adhesive will essentially come into contact simultaneously with facing sides of the two disc elements (12, 14); and
c) bringing the disc elements (12, 14) towards each other to achieve a well-defined, uniform filling out of adhesive between the disc elements,
**characterized by**, prior to and during the application of liquid adhesive, holding at least one of the disc elements (12, 14) in a convexly curved shape relative to the other disc element to form a radially outwardly diverging gap (46) formed between at least a radially outer section of the disc elements (12, 14).

2. Method according to Claim 1, **characterized in that** a disc element or the disc elements (12, 14) is, respectively are curved against a respective profiled holder (30, 32; 30'; 32') by creation of a subatmospheric pressure on the side of the disc element facing the holder.

3. Method according to Claim 1 or 2, **characterized in that** the disc elements (12, 14) are rotated during injection of the adhesive.

4. Method according to one of the preceding Claims, **characterized in that** at least one adhesive injection nozzle (50) is inserted into the gap (46) prior to adhesive application.

5. Method according to Claim 4, **characterized in that** the nozzle (50) is inserted into the gap (46) radially from the outside.

6. Method according to one of the Claims 1-5, **characterized in that** the adhesive is applied in an annular shape (52) around the disc elements.

7. Method according to Claim 6, **characterized in that** the disc elements (12, 14) are each rotated at least one half rotation, preferably one half to one complete rotation in opposite directions.

8. Method according to one Claims 1-7, **characterized in that** the disc elements (12, 14) are brought towards each other after the application of adhesive by gravity on one disc element (14) and by the capillary forces of the adhesive.

9. Device for glueing together two disc elements (12, 14), especially substrates for digital audio, video or computer discs, such as DVD's, comprising a lower holder (30; 30') for carrying one disc element (12); an upper holder (32; 32') for supporting the other disc element (14) in a coaxial relation to the lower disc element, to form a gap (46) between the disc elements (12, 14); and a means (50) for applying an annular string of liquid adhesive in an inner area of a gap (46), **characterized by** means for , prior to and during the application of liquid adhesive, holding at least one of the disc elements (12, 14) in a convexly curved shape relative to the other disc element to form a radially outwardly diverging gap (46) formed between at least a radially outer section of the disc elements (12, 14).

10. Device according to claim 9, **characterized in that** the said means comprise at least one (30, 32, 32') of the holders, which for that purpose has a surface facing the disc element (14) which is essentially convex, said surface together with the disc element and sealing elements (36, 38) being designed to delimit a space (48) which can be subjected to a vacuum.

11. Device according to one of Claims 9-10, **characterized in that** the means for applying adhesive comprises a nozzle (50; 50') disposed to direct a stream of adhesive into the gap (46) so that the adhesive stream strikes essentially simultaneously facing surfaces of the disc elements (12, 14).

12. Device according to Claim 11, **characterized in that** the nozzle (50) is insertable into and retractable from the gap (46) radially from the outside.

13. Device according to one of Claims 9-12, **characterized in that** the holders (30, 32; 30'; 32') are rotatable in the same direction for applying an annular string (52) of adhesive around the disc elements (12, 14).

14. Device according to Claim 13, **characterized in that** the holders (30, 32; 30', 32') are rotatable relative to each other in opposite directions after application of the string (52) of adhesive.

15. Device according to one of Claims 9-14, **characterized in that** the lower holder (30') has an essentially flat disc supporting surface.

## Patentansprüche

1. Verfahren zum Zusammenkleben zweier Scheibenelemente (12, 14), insbesondere Substrate für digitale Audio-, Video- oder Computerscheiben, beispielsweise DVDs, umfassend folgende Schritte:
a) derartiges koaxiales Zusammenbringen der beiden Scheibenelemente (12, 14), dass zwischen den Scheibenelementen ein Spalt (46) verbleibt;
b) derartiges Aufbringen eines Flüssigklebstoffs (52) in die Form eines Rings in einem Innenbereich des Spaltes (46), dass der Klebstoff im Wesentlichen gleichzeitig mit einander zugewendeten Seiten der beiden Scheibenelemente (12, 14) in Berührung gerät; und
c) Bringen der Scheibenelemente (12, 14) aufeinander zu, um ein gutdefiniertes, gleichmäßiges Ausfüllen von Klebstoff zwischen den Scheibenelementen zu erzielen,
**gekennzeichnet durch** das Halten von zumindest einem der Scheibenelemente (12, 14) in einer konvex gekrümmten Form relativ zum anderen Scheibenelement vor und während des Aufbringens des Flüssigklebstoffs, um einen zwischen zumindest einem radial äußeren Abschnitt der Scheibenelemente (12, 14) gebildeten, radial nach außen divergierenden Spalt (46) zu bilden.

2. Verfahren nach Anspruch 1, **dadurch gekennzeichnet, dass** ein Scheibenelement oder die Scheibenelemente (12, 14) gegen einen jeweiligen profilierten Halter (30, 32; 30'; 32') gekrümmt wird bzw. werden, indem auf die dem Halter zugewendete Seite des Scheibenelements ein unteratmosphärischer Druck erzeugt wird.

3. Verfahren nach Anspruch 1 oder 2, **dadurch gekennzeichnet, dass** die Scheibenelemente (12, 14) während Einspritzen des Klebstoffs gedreht werden.

4. Verfahren nach einem der vorhergehenden Ansprüche, **dadurch gekennzeichnet, dass** zumindest eine Klebstoffeinspritzdüse (50) vor dem Aufbringen des Klebstoffs in den Spalt (46) eingeführt wird.

5. Verfahren nach Anspruch 4, **dadurch gekennzeichnet, dass** die Düse (50) radial von außen in den Spalt (46) eingeführt wird.

6. Verfahren nach einem der Ansprüche 1 bis 5, **dadurch gekennzeichnet, dass** der Klebstoff in einer Ringform (52) rund um die Scheibenelemente aufgebracht wird.

7. Verfahren nach Anspruch 6, **dadurch gekennzeichnet, dass** die Scheibenelemente (12, 14) jedes zumindest eine halbe Umdrehung, bevorzugt eine halbe bis eine ganze Umdrehung in entgegengesetzte Richtungen gedreht werden.

8. Verfahren nach einem der Ansprüche 1 bis 7, **dadurch gekennzeichnet, dass** die Scheibenelemente (12, 14) nach dem Aufbringen von Klebstoff über Schwerkraft auf ein Scheibenelement (14) und die Kapillarkräfte des Klebstoffs aufeinander zu gebracht werden.

9. Vorrichtung zum Zusammenkleben zweier Scheibenelemente (12, 14), insbesondere Substrate für digitale Audio-, Video- oder Computerscheiben, beispielsweise DVDs, mit einem unteren Halter (30; 30') zum Tragen eines Scheibenelements (12); mit einem oberen Halter (32; 32') zum Stützen des anderen Scheibenelements (14) in einer koaxialen Beziehung zum unteren Scheibenelement, um zwischen den Scheibenelementen (12, 14) einen Spalt (46) zu bilden; und eine Einrichtung (50) zum Aufbringen eines ringförmigen Wulstes eines Flüssigklebstoffs in einen Innenbereich des Spalts (46), **gekennzeichnet durch** Einrichtungen zum Halten von zumindest einem der Scheibenelemente (12, 14) in einer konvex gekrümmten Form relativ zum anderen Scheibenelement vor und während des Aufbringens des Flüssigklebstoffs, um einen zwischen zumindest einem radial äußeren Abschnitt der Scheibenelemente (12, 14) gebildeten, radial nach außen divergierenden Spalt (46) zu bilden.

10. Vorrichtung nach Anspruch 9, **dadurch gekennzeichnet, dass** die genannten Einrichtungen zumindest einen (30, 32, 32') der Halter umfassen, der zu diesem Zweck eine dem Scheibenelement (14) zugewendete, im Wesentlichen konvexe Oberfläche aufweist, welche Oberfläche zusammen mit dem Scheibenelement und Dichtelementen (36, 38) ausgelegt ist, um einen Raum (48) zu begrenzen, der einem Vakuum aussetzbar ist.

11. Vorrichtung nach einem der Ansprüche 9 bis 10, **dadurch gekennzeichnet, dass** die Einrichtung zum Aufbringen von Klebstoff eine Düse (50; 50') umfasst, die angeordnet ist, um einen Klebstoffstrom derart in den Spalt (46) zu richten, dass der Klebstoffstrom auf einander zugewendete Oberflächen der Scheibenelemente (12, 14) im Wesentlichen gleichzeitig auftrifft.

12. Vorrichtung nach Anspruch 11, **dadurch gekennzeichnet, dass** die Düse (50) radial von außen in den Spalt (46) einführbar und aus ihm zurückziehbar ist.

13. Vorrichtung nach einem der Ansprüche 9 bis 12, **dadurch gekennzeichnet, dass** die Halter (30, 32; 30', 32') in dieselbe Richtung drehbar sind, um einen ringförmigen Klebstoffstreifen (52) rund um die Scheibenelemente (12, 14) aufzubringen.

14. Vorrichtung nach Anspruch 13, **dadurch gekennzeichnet, dass** die Halter (30, 32; 30', 32') nach dem Aufbringen des Klebstoffstreifens (52) relativ zueinander in entgegengesetzte Richtung drehbar sind.

15. Vorrichtung nach einem der Ansprüche 9 bis 14, **dadurch gekennzeichnet, dass** der untere Halter (30') eine im Wesentlichen flache Scheibenstützfläche aufweist.

## Revendications

1. Procédé pour coller ensemble deux éléments de disque (12, 14), spécialement des substrats pour des disques numériques audio, vidéo ou d'ordinateur, comme des DVD, comprenant les étapes consistant à :
a) amener les deux éléments de disque (12, 14) coaxialement ensemble l'un avec l'autre de manière qu'un espace (46) subsiste entre les éléments de disque ;
b) appliquer dans une zone intérieure de l'espace (46) un adhésif liquide (52) sous la forme d'un anneau de manière que l'adhésif viendra essentiellement simultanément en contact avec les côtés qui se font face des deux éléments de disque (12, 14) ; et
c) amener les éléments de disque (12, 14) l'un vers l'autre pour obtenir un remplissage d'adhésif uniforme, bien défini, entre les éléments de disque,
**caractérisé par**, avant et pendant l'application de l'adhésif liquide, le maintien d'au moins l'un des éléments de disque (12, 14) dans une forme courbée d'une manière convexe relativement à l'autre élément de disque pour former un espace divergent radialement vers l'extérieur (46) formé entre au moins une section radialement extérieure des éléments de disque (12, 14).

2. Procédé selon la revendication 1, **caractérise en ce qu'**un élément de disque ou les éléments de disque (12, 24) est, respectivement sont courbés contre un support profilé respectif (30, 32 ; 30', 32') en créant une pression sous-atmosphérique sur le côté de l'élément de disque orienté vers le support.

3. Procédé selon la revendication 1 ou 2, **caractérisé en ce que** les éléments de disque (12, 14) sont amenés à tourner pendant l'injection de l'adhésif.

4. Procédé selon l'une des revendications précédentes, **caractérisé en ce qu'**au moins une buse d'injection d'adhésif (50) est insérée dans l'espace (46) avant l'application de l'adhésif.

5. Procédé selon la revendication 4, **caractérisé en ce que** la buse (50) est insérée dans l'espace (46) radialement depuis l'extérieur.

6. Procédé selon l'une des revendications 1 à 5, **caractérisé en ce que** l'adhésif est appliqué en une forme annulaire (52) autour des éléments de disque.

7. Procédé selon la revendication 6, **caractérisé en ce que** les éléments de disque (12, 14) sont chacun entraînés en rotation selon au moins un demi-tour, de préférence, un demi-tour à un tour complet dans des directions opposées.

8. Procédé selon l'une des revendications 1 à 7, **caractérisé en ce que** les éléments de disque (12, 14) sont amenés l'un vers l'autre après l'application de l'adhésif par gravité sur un élément de disque (14) et par les forces capillaires de l'adhésif.

9. Dispositif pour coller ensemble deux éléments de disque (12, 14), spécialement des substrats pour des disques numériques audio, vidéo ou d'ordinateur, comme des DVD, comprenant un support inférieur (30 ; 30') pour supporter un élément de disque (12), un support supérieur (32 ; 32') pour supporter l'autre élément de disque (14) en une relation coaxiale à l'élément de disque inférieur, pour former un espace (46) entre les éléments de disque (12, 14) ; et un moyen (50) pour appliquer un cordon annulaire d'adhésif liquide dans une zone intérieure d'un espace (46), **caractérisé par** un moyen pour, avant et pendant l'application de l'adhésif liquide, maintenir au moins l'un des éléments de disque (12, 14) dans une forme courbée d'une manière convexe relativement à l'autre élément de disque pour former un espace (46) divergent radialement vers l'extérieur formé entre au moins une section radialement extérieure des éléments de disque (12, 14).

10. Dispositif selon la revendication 9, **caractérisé en ce que** ledit moyen comprend au moins l'un (30, 32, 32') des supports qui, à cette fin, présente une surface orientée vers l'élément de disque (14) qui est essentiellement convexe, ladite surface ensemble avec l'élément de disque et des éléments d'étanchéité (36, 38) étant conçue pour délimiter un espace (48) qui peut être soumis à un vide.

11. Dispositif selon l'une des revendications 9-10, **caractérisé en ce que** le moyen pour appliquer l'adhésif comprend une buse (50 ; 50') disposée pour diriger un flux d'adhésif dans l'espace (46) de sorte que le flux d'adhésif heurte essentiellement simultanément des surfaces qui se font face des éléments de disque (12, 14).

12. Dispositif selon la revendication 11, **caractérisé en ce que** la buse (50) est insérable dans et retirable de l'espace (46) radialement de l'extérieur.

13. Dispositif selon l'une des revendications 9 à 12, **caractérisé en ce que** les supports (30, 32 ; 30' ; 32') peuvent tourner dans la même direction pour appliquer un filet annulaire (52) d'adhésif autour des éléments de disque (12, 14).

14. Dispositif selon la revendication 13, **caractérisé en ce que** les supports (30, 32 ; 30', 32') peuvent tourner l'un relativement à l'autre dans des directions opposées après l'application du filet (52) d'adhésif.

15. Dispositif selon l'une des revendications 9 à 14, **caractérisé en ce que** le support inférieur présente une surface de support de disque essentiellement plate.
